# FASCICULE DE BREVET EUROPEEN

(11) **EP 1 352 190 B1**
(45) Date de publication et mention de la délivrance du brevet: **19.09.2007**
(21) Numéro de dépôt: 02712011.2
(22) Date de dépôt: 18.01.2002
(51) Int. Cl.: F16K 31/143, F16K 31/122, F16K 1/38

(54) **VANNE A POINTEAU A COMMANDE PNEUMATIQUE**
PNEUMATISCH ANGESTEUERTES VENTIL
PNEUMATICALLY-CONTROLLED NEEDLE VALVE

(30) Priorité: 19.01.2001 FR 0100751
(43) Date de publication de la demande: 15.10.2003
(73) Titulaire: EISENMANN Anlagenbau GmbH & Co. KG, 71032 Böblingen (DE)
(72) Inventeur: RODRIGUES, José, F-38650 SAINT GUILLAUME (FR)
(74) Mandataire: Ostertag, Ulrich
(86) Numéro de dépôt international: PCT/FR2002/000214
(87) Numéro de publication internationale: WO 2002/057672

(56) Documents cités:
- WO-A-98/08615
- DE-U- 29 814 489
- US-A- 3 904 167
- US-A- 4 585 207

## Description

La présente invention a pour objet une vanne à pointeau à commande pneumatique. Cette vanne est destinée notamment à l'équipement de blocs changeurs de teinte et des pulvérisateurs de peinture utilisés dans des installations de peinture, par exemple dans l'industrie automobile.

Une vanne de ce type comporte, de façon connue, un corps cylindrique destiné à être monté dans un alésage de l'appareil à équiper, avec ménagement de deux surfaces d'étanchéité annulaires délimitant une chambre qui, reliée à un dispositif d'alimentation en air comprimé, communique avec un premier compartiment disposé à l'intérieur du corps et séparé d'un second compartiment par un piston. Le piston est solidaire d'une tige dépassant axialement à l'extrémité avant du corps, tige dont l'extrémité est équipée d'un pointeau destiné, suivant sa position, à prendre appui ou non sur un siège de vanne. La seconde chambre contient au moins un ressort agissant sur la tige dans un sens de fermeture de la vanne par appui du pointeau sur son siège. L'air comprimé agit, dans le premier compartiment, dans le sens inverse. La tige traversant l'extrémité avant du corps, une étanchéité est réalisée à ce niveau. Généralement, le corps est totalement cylindrique, et son extrémité avant est perpendiculaire à son axe. Cette technique pose des problèmes de centrage et de concentricité entre le corps de la vanne et l'alésage ménagé dans l'appareil à équiper. Si le centrage n'est pas parfait, le pointeau s'appuie pas de façon symétrique sur son siège, il peut en résulter un défaut d'étanchéité au niveau du pointeau et un mélange de deux teintes au niveau de la vanne ; ce défaut non automatiquement détectable peut même aller « contaminer » le circuit de distribution de la teinte, c'est à dire plusieurs centaines de litres de peinture.

De même, le défaut de centrage peut produire une usure des joints et éventuellement un défaut d'étanchéité.

Ce type de vanne vient se monter dans un logement aménagé dans un corps ou bloc de telle manière que trois zones distinctes sont créées :
- une première zone, située à l'avant de la vanne au niveau du pointeau, est constituée d'une chambre de peinture dans laquelle débouche le conduit d'alimentation en peinture, éventuellement le conduit de recirculation ; cette chambre communique avec le conduit alimentant la buse de pulvérisation de peinture ;
- une seconde zone intermédiaire, en général située au niveau de la partie centrale de la vanne, est constituée d'une chambre sous air comprimé servant au pilotage de la vanne ; dans cette chambre débouchent les conduits d'alimentation et d'échappement de l'air comprimé ;
- une troisième zone, située à l'arrière de la vanne, est en relation avec le milieu environnant.

Ces zones sont rendues étanches entre elles grâce à des joints de forme torique placés extérieurement sur le corps extérieur de la vanne. Un premier joint permet d'étancher les zones « peinture » et « air » entre elles, un second joint permet d'étancher la zone « air » vis-à-vis de l'extérieur.

La fonction d'étanchéité de ces joints est primordiale ; en effet un défaut d'étanchéité du premier joint entraînerait une remontée de peinture dans le réseau d'air comprimé, non automatiquement détectable; un défaut d'étanchéité du second joint entraînerait une absence de pilotage de la vanne ; un défaut d'étanchéité global des deux joints entraînerait une fuite de peinture non automatiquement détectable dans la machine.

Or la vanne étant en général montée par vissage à l'intérieur du logement du corps ou bloc, ces joints « toriques » subissent une friction importante lors du montage pouvant les vriller et les détériorer. Cette dégradation n'est pas visible une fois la vanne montée dans son corps.

L'étanchéité au niveau de la tige de piston a elle-même une importance primordiale car les conséquences d'un défaut seraient similaires à ce qui est décrit plus haut.

Le but de l'invention est de fournir une vanne à pointeau à commande pneumatique du type concerné, dans laquelle l'étanchéité entre les surfaces d'étanchéité annulaires du corps, et la paroi de l'alésage dans lequel le corps est monté, ne risque pas d'être détériorée lors du montage, avec laquelle le centrage soit parfaitement assuré, et dans laquelle l'étanchéité entre la tige portant le pointeau et le corps est assurée sans engendrer de frictions de valeurs trop importantes.

A cet effet, dans la vanne selon l'invention qui appartient au type précité, l'extrémité arrière du corps de la vanne est fermée par un bouchon lié audit corps de façon à être bloqué en translation mais libre en rotation sur celui-ci, ce bouchon étant fileté extérieurement afin d'être vissé dans un taraudage de l'alésage.

Avantageusement, le bouchon est lié au corps de la vanne par clipsage.

Suivant une autre caractéristique de l'invention, la partie avant du corps de la vanne possède une forme tronconique centrée sur l'axe de la tige et de même inclinaison que celle d'une portée tronconique délimitant une partie de l'alésage recevant la vanne. Cette caractéristique permet de réaliser le vissage du bouchon dans l'alésage de l'appareil sans pivotement du corps de vanne, et par conséquent sans risque de vrillage des joints toriques qui assurent l'étanchéité entre le corps de vanne et la paroi de l'alésage.

Le centrage est ainsi réalisé de façon parfaite en raison des portées tronconiques, lesquelles participent en outre à la réalisation de l'étanchéité entre le corps de la vanne et la paroi de l'alésage dans lequel ladite vanne est montée.

Suivant une autre caractéristique de l'invention, la tige solidaire du piston dépasse de l'arrière du corps de la vanne en traversant un orifice ménagé dans le bouchon du corps, et l'extrémité de la tige comporte des moyens d'actionnement manuel, tels qu'une gorge périphérique. Cet agencement permet, en cas de besoin, d'exercer une traction sur la tige, à l'encontre de l'action du ressort, en vue d'ouvrir manuellement la vanne, pour la réalisation d'opérations de tests. Une telle possibilité n'est pas offerte habituellement, les tests devant être réalisés en commandant l'ouverture de la vanne au niveau de l'armoire de commande, qui ne se trouve pas nécessairement à proximité de la buse de pulvérisation, s'il s'agit d'une installation de peinture, ce qui nécessite alors l'intervention de deux opérateurs.

Selon une autre caractéristique de l'invention, l'étanchéité du passage de la tige à l'extrémité avant du corps de vanne est réalisée par deux joints à lèvres. En outre, l'étanchéité du piston à l'intérieur du corps de vanne est réalisée par un joint à lèvres Ces caractéristiques sont intéressantes, car elles permettent de réduire le nombre de joints, et par conséquent les frottements qui résultent de la présence de ces joints. Il est donc possible de faire fonctionner une telle vanne à l'aide d'une pression de commande d'une valeur relativement basse, par exemple de 6 bars.

Afin de parfaire les conditions d'étanchéité de la vanne dans la positiion de fermeture de celle-ci, le pointeau est en matière plastique et est associé à un siège en acier inoxydable.

De toute façon, l'invention sera bien comprise à l'aide de la description qui suit, en référence au dessin schématique annexé représentant, à titre d'exemple, une forme d'exécution de cette vanne à pointeau à commande pneumatique :
Figure 1 est une vue de côté d'une vanne selon l'invention ;
Figure 2 est une vue en coupe longitudinale de cette vanne en position montée dans le corps d'un bloc changeur de teinte d'une installation de peinture.

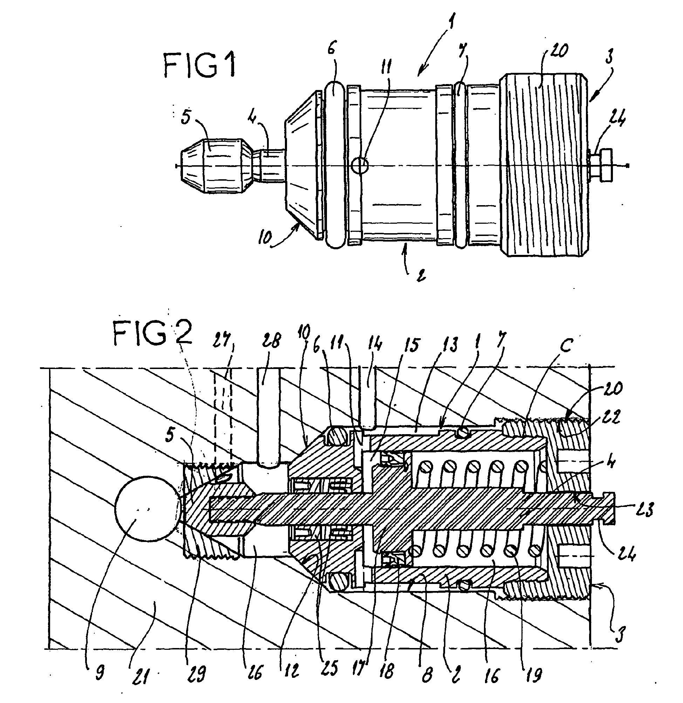

La vanne 1 selon l'invention est représentée en vue extérieure à la figure 1, et comprend un corps 2 dont l'extrémité postérieure est équipée d'un bouchon 3, et de l'extrémité avant duquel dépasse une tige 4 équipée d'un pointeau 5.

Le corps de vanne 2 est de forme cylindrique, et il est équipé à sa périphérie de deux joints annulaires 6 et 7 destinés à réaliser l'étanchéité vis-à-vis d'un alésage cylindrique 8 ménagé dans un bloc 21 de changeur de teinte d'une installation de peinture, dont une partie est représentée à la figure 2. L'alésage 8 débouche dans un canal 9 destiné à véhiculer la peinture, le canal 9 étant ménagé dans le bloc 21.

Comme montré aux figures 1 et 2, l'extrémité avant du corps 2 comporte une portée 10 tronconique destinée à venir prendre appui contre une portée 12 que comporte l'alésage 8 ménagé dans le bloc changeur de teinte. Cet agencement assure, d'une part, le centrage de la vanne 1, à l'intérieur de l'alésage 8 et, d'autre part, participe à l'étanchéité entre le corps de vanne et la paroi de l'alésage.

Comme montré à la figure 2, la paroi extérieure du corps 2 délimite avec l'alésage 8 une chambre annulaire 13 pouvant être alimentée en air sous pression par un canal 14 du bloc 21. La chambre annulaire 13, dont l'étanchéité est assurée par les joints 6 et 7, communique avec un compartiment 15 ménagé à l'intérieur du corps 2, par des orifices 11. L'intérieur du corps 2 comprend le compartiment 15 et un second compartiment 16 situé du côté de l'arrière, séparés l'un de l'autre par un piston 17 avec réalisation de l'étanchéité entre le piston 17 et le corps 2 par un joint à lèvres 18. Le compartiment 16 contient un ressort 19 prenant appui contre le piston 17 pour déplacer la tige 4 du côté de l'avant du corps 2. La partie arrière du corps 2 est fixée par le bouchon 3. Ce bouchon 3 est clipsé sur le corps 2, par des formes complémentaires adaptées comme indiqué en C sur la figure 2, de telle sorte qu'il est bloqué en translation vis-à-vis du corps 2 mais libre en rotation vis-à-vis de celui-ci. Ce bouchon 3 comporte un filetage extérieur 20 destiné à permettre son vissage dans un taraudage 22 de l'alésage 8. Ainsi, la fixation de la vanne 1 est réalisée par vissage du bouchon 3 dans le taraudage 22 de l'alésage 8. Il doit être noté que, lors du vissage du bouchon 3, le corps 2 de la vanne 1 n'est pas entraîné en rotation, de telle sorte que l'on évite les risques de vrillage des joints 6 et 7 et les défauts d'étanchéité qui pourraient en résulter.

Comme montré aux figures 1 et 2, la tige 4 traverse le bouchon 3 par une ouverture 23, et l'extrémité extérieure de la tige 4 présente une gorge périphérique 24 permettant l'actionnement de cette tige 4 manuellement à l'aide d'un outil (non représenté).

La partie avant de la tige 4 traverse la partie avant du corps 2, l'étanchéité à ce niveau étant réalisée à l'aide de deux joints à lèvres 25. La partie avant de la tige 4 est disposée à l'intérieur d'une chambre 26 du bloc 21, dans laquelle débouchent un canal 27 d'amenée de peinture et un canal 28 assurant le retour de la peinture non consommée vers le réservoir, les canaux 27 et 28 étant intégrés dans le bloc 21.

Le pointeau 5, monté à l'extrémité de la tige 4, est destiné à prendre appui contre un siège 29 réalisé en acier inoxydable, tandis que le pointeau 5 est en matière plastique.

La vanne 1 est représentée, à la figure 2, dans sa position de fermeture. Cette position de fermeture est maintenue sous l'action du ressort 19, le compartiment 15 n'étant alors pas alimenté en air sous pression. Pour réaliser l'ouverture de la vanne 1, de l'air sous pression amené par le canal 14 est introduit dans le compartiment 15, repoussant ainsi le piston 17 et la tige 4 à l'encontre de l'action du ressort 19. Le canal 9 est alors mis en communication avec la chambre 26, permettant le passage de peinture du canal d'amenée de peinture 27 vers le canal 9 puis vers la buse de pulvérisation de peinture. Lorsque la pression d'air dans le compartiment 15 est supprimée, le ressort 19 referme la vanne 1.

Comme il ressort de ce qui précède, l'invention apporte une grande amélioration à la technique existante en fournissant une vanne à pointeau à commande pneumatique qui est de structure simple, qui offre d'excellentes qualités d'étanchéité, qui ne nécessite pas une pression d'air élevée pour son actionnement, et qui peut être actionnée manuellement en agissant directement sur la tige portant le pointeau.

## Revendications

1. Vanne (1) à pointeau à commande pneumatique, du type comportant un corps cylindrique (2) destiné à être monté dans un alésage (8) d'un appareil à équiper, avec ménagement de deux surfaces d'étanchéité annulaires (6, 7) délimitant une chambre (13) qui, reliée à un dispositif d'alimentation en air comprimé, communique avec un premier compartiment (15) disposé à l'intérieur du corps (2) et séparé d'un second compartiment (16) par un piston (17), le piston (17) étant solidaire d'une tige (4) qui, dépassant axialement du corps (2), est équipée d'un pointeau (5) destiné, suivant sa position, à prendre appui ou non sur un siège (29), le second compartiment (16) contenant au moins un ressort (19) agissant sur la tige (4) dans un sens de fermeture de la vanne (1) par appui du pointeau (5) sur son siège (29), tandis que l'air comprimé agit sur le piston (17) dans le sens inverse, la tige (4) traversant avec étanchéité l'extrémité avant du corps (2), **caractérisée en ce que** l'extrémité arrière du corps (2) de la vanne (1) est fermée par un bouchon (3) lié audit corps (2) de façon à être bloqué en translation mais libre en rotation sur celui-ci, ce bouchon (3) étant fileté extérieurement afin d'être vissé dans un taraudage (22) de l'alésage (8).

2. Vanne (1) selon la revendication 1, **caractérisée en ce que** le bouchon (3) est lié au corps (2) de la vanne (1) par clipsage (C).

3. Vanne (1) selon l'une des revendications 1 et 2, **caractérisée en ce que** la partie avant du corps (2) de la vanne (1) possède une forme tronconique (10) centrée sur l'axe de la tige (4) et de même inclinaison que celle d'une portée tronconique (12) délimitant une partie de l'alésage (8) recevant la vanne (1).

4. Vanne (1) selon l'une des revendications 1 à 3, **caractérisée en ce que** la tige (4) solidaire du piston (17) dépasse de l'arrière du corps (2) de la vanne (1) en traversant un orifice (23) ménagé dans le bouchon (3) du corps (2), et l'extrémité de la tige (4) comporte des moyens d'actionnement manuel, tels qu'une gorge périphérique (24).

5. Vanne (1) selon l'une des revendications 1 à 4, **caractérisée en ce que** l'étanchéité du passage de la tige (4) à l'extrémité avant du corps de vanne (2) est réalisée par deux joints à lèvres (25).

6. Vanne (1) selon l'une des revendications 1 à 5, **caractérisée en ce que** l'étanchéité du piston (17) à l'intérieur du corps de vanne (2) est réalisée par un joint à lèvres (18).

7. Vanne (1) selon l'une des revendications 1 à 6, **caractérisée en ce que** le pointeau (5) est en matière plastique et est associé à un siège (29) en acier inoxydable.

## Claims

1. Pneumatically controlled valve (1), of the type comprising a cylindrical body (2) intended to be mounted in a bore (8) of an appliance to be equipped, with provision of two annular sealing surfaces (6, 7) delimiting a chamber (13), which, connected to a device supplying compressed air, communicates with a first compartment (15) arranged inside the body (2) and separated from a second compartment (16) by a piston (17), the piston (17) being integral with a rod (4) which, protruding axially from the body (2), is equipped with a pointed control element (5) intended, according to its position, to bear or not to bear on a seat (29), the second compartment (16) containing at least one spring (19) acting on the rod (4) in a direction of closure of the valve (1) by bearing the pointed control element (5) on its seat (29), while the compressed air acts on the piston (17) in the opposite direction, the rod (4) passing with sealing through the front end of the body (2), **characterised in that** the rear end of the body (2) of the valve (1) is closed by a plug (3) connected to said body (2) so as to be locked in translatory movement but free in rotation thereon, this plug (3) being threaded externally so that it can be screwed into a tapping (22) of the bore (8).

2. Valve (1) according to claim 1, **characterised in that** the plug (3) is connected to the body (2) of the valve (1) by being snapped-on (C).

3. Valve (1) according to one of claims 1 and 2, **characterised in that** the front part of the body (2) of the valve (1) has the shape of a truncated cone (10) centred on the axis of the rod (4) and of the same inclination as that of a truncated cone shaped span (12) delimiting a part of the bore (8) receiving the valve (1).

4. Valve (1) according to one of claims 1 to 3, **characterised in that** the rod (4) integral with the piston (17) protrudes from the rear of the body (2) of the valve (1) by passing through an orifice (23) provided in the plug (3) of the body (2), and the end of the rod (4) comprises manual actuation means, such as a peripheral groove (24).

5. valve (1) according to one of claims 1 to 4, **characterised in that** the movement of the rod (4) at the front end of the valve body (2) is sealed by two lip seals (25).

6. Valve (1) according to one of claims 1 to 5, **characterised in that** the piston (17) inside the valve body (2) is sealed by a lip seal (18).

7. Valve (1) according to one of claims 1 to 6, **characterised in that** the pointed control element (5) is made of a plastic material and is associated with a seat (29) made of stainless steel.

## Patentansprüche

1. Pneumatisch angesteuertes Ventil (1) mit einem zylindrischen Körper (2), der dazu bestimmt ist, in einer Bohrung (8) eines auszustattenden Gerätes angeordnet zu werden, wobei zwei ringförmige Dichtflächen (6, 7) gebildet werden, welche eine Kammer (13) begrenzen, die, angeschlossen an eine Druckluft-Versorgungseinrichtung mit einem ersten im Inneren des Körpers (2) angeordneten und von einem zweiten Raumbereich (16) durch einen Kolben (17) getrennten Raumbereich (15) kommuniziert, wobei der Kolben (17) mit einer Stange (4) verbunden ist, welche axial den Körper (2) überragend mit einem spitzen Steuerkörper (5) versehen ist, der sich gemäß seiner Stellung entweder an einem Ventilsitz (29) abstützt oder nicht, wobei der zweite Raumbereich (16) mindestens eine Feder (19) enthält, die die Stange (4) in Schließrichtung des Ventiles (1) vorspannt, indem sie den spitzen Steuerkörper (5) auf seinen Sitz (29) drückt, während die Druckluft auf den Kolben (17) in umgekehrter Richtung wirkt, wobei die Stange (4) das vordere Ende des Körpers (2) dicht durchsetzt, **dadurch gekennzeichnet, dass** das hintere Ende des Körpers (2) des Ventiles (1) durch einen Stopfen (3) verschlossen ist, welcher mit dem genannten Körper (2) derart verbunden ist, dass er in Translation verblockt, aber drehbar auf diesem sitzt, indem dieser Stopfen (3) mit einem Aussengewinde versehen ist, um in ein Innengewinde (22) der Bohrung (8) geschraubt zu werden.

2. Ventil (1) nach Anspruch 1, **dadurch gekennzeichnet, dass** der stopfen (3) durch Klipsen (C) mit dem Körper (2) des Ventiles (1) verbunden ist.

3. Ventil (1) nach einem der Ansprüche 1 und 2, **dadurch gekennzeichnet, dass** der vordere Teil des Körpers (2) des Ventiles (1) eine kegelstumpfförmige Gestalt (10) besitzt, welche auf die Achse der Stange (4) zentriert ist und die gleiche Neigung aufweist wie eine kegelstumpfförmige Schulter (12), die einen Teil der Bohrung (8) begrenzt, die das Ventil (1) aufnimmt.

4. Ventil (1) nach einem der Ansprüche 1 bis 3, **dadurch gekennzeichnet, dass** die mit dem Kolben (17) verbundene Stange (4) die Hinterseite des Körpers (2) des Ventiles (1) eine Öffnung (23), welche in dem Stopfen (3) des Körpers (2) ausgespart ist, durchdringend überragt und das Ende der stange (4) manuelle Betätigungsmittel wie eine Aussennut (24) aufweist.

5. Ventil (1) nach einem der Ansprüche 1 bis 4, **dadurch gekennzeichnet, dass** die Durchgangsdichtung der Stange (4) am vorderen Ende des Ventilkörpers (2) durch zwei Lippendichtungen (25) realisiert ist.

6. Ventil (1) nach einem der Ansprüche 1 bis 5, **dadurch gekennzeichnet, dass** die Dichtung des Kolbens (17) im Inneren des Ventilkörpers (2) durch eine Lippendichtung (18) realisiert ist.

7. Ventil (1) nach einem der Ansprüche 1 bis 6, **dadurch gekennzeichnet, dass** der spitze Steuerkörper (5) aus Kunststoffmaterial besteht und mit einem Sitz (29) aus rostfreiem stahl zusammenarbeitet.
